# EUROPÄISCHE PATENTSCHRIFT

(11) **EP 1 977 120 B1**
(45) Veröffentlichungstag und Bekanntmachung des Hinweises auf die Patenterteilung: **24.03.2010**
(21) Anmeldenummer: 08701141.7
(22) Anmeldetag: 17.01.2008
(51) Int. Cl.: F16B 35/06

(54) **KOPF EINER SENKSCHRAUBE**
HEAD OF A COUNTERSUNK SCREW
TÊTE DE VIS À TÊTE FRAISÉE

(30) Priorität: 05.02.2007 DE 102007005677
(43) Veröffentlichungstag der Anmeldung: 08.10.2008
(73) Patentinhaber: Ludwig Hettich & Co., 78713 Schramberg-Sulgen (DE)
(72) Erfinder: HETTICH, Ulrich, 78713 Schramberg (DE)
(74) Vertreter: Liesegang, Eva
(86) Internationale Anmeldenummer: PCT/EP2008/000354
(87) Internationale Veröffentlichungsnummer: WO 2008/095593

(56) Entgegenhaltungen:
- AU-A- 1 987 776
- DE-A1- 3 334 212
- DE-U1- 29 906 200

## Beschreibung

Die Erfindung betrifft eine Senkschraube mit einem Kopf mit einer Unterseite, die mindestens eine Stützfläche oder -kante, welche Teil einer Rotationsfläche um die Schraubenachse bildet und sich an eine entsprechend konturierte Ansenkfläche eines Anbauteils anschmiegen kann, und mindestens eine Vertiefung aufweist, welche an ihrem in Eindrehrichtung der Senkschraube gesehen ablaufenden Ende durch eine Schneidkante begrenzt ist.

Bei einer bekannten Senkschraube mit einem Kopf dieser Art begrenzt die Schneidkante den auflaufenden Endbereich der Stützfläche, liegt also in der Rotationsfläche. Soll die Schraube in eine vorgefertigte Ansenkfläche eines metallischen Anbauteiles eingeschraubt werden, so kann die Schneidkante, diese Ansenkfläche beschädigen, insbesondere Beschichtungen der Ansenkfläche zur Verbesserung der Korrosionsbeständigkeit, wie galvanische oder anorganische metallische Schichten oder auch Kunststoffbeschichtungen (DE 33 34 212 A1).

Der Erfindung liegt die Aufgabe zugrunde, eine Senkschraube der eingangs beschriebenen Art so auszubilden, daß einerseits die Schneidkanten beim Einschrauben in weiches Material, wie Holz, selbst ihre Ansenkfläche schaffen oder eine Sperrwirkung erzeugen können, andererseits aber beim Einschrauben in metallische Anbauteile mit vorgefertigten Ansenkungen deren Oberfläche nicht verletzen können.

Zur Lösung dieser Aufgabe dient der Patentanspruch 1, wonach an dem Kopf einer erfindungsgemäßen Senkschraube in Eindrehrichtung gesehen vor der Stützfläche eine daran anstoßende, radial einwärts geneigte Vorlauffläche angeordnet ist, welche an ihrem auflaufenden, freien Ende die Schneidkante hat, die über ihre Länge von der Rotationsfläche einen radialen Abstand nach innen wahrt.

Bei einer Senkschraube nach der Erfindung begrenzt die Schneidkante nicht die Stützfläche, sondern eine in Eindrehrichtung daran vorzugsweise kontinuierlich anschließende Vorlauffläche, die radial einwärts geneigt ist.

Da die Ansenkfläche im eingedrehten Zustand der Schraube mit der Rotationsfläche zusammenfällt, aber nicht weiter radial einwärts verläuft, hält die Schneidkante über ihre ganze Länge einen radialen Abstand von der Ansenkfläche, so daß die Schneidkante die Ansenkfläche oder eine darauf aufgebrachte Beschichtung nicht berühren und damit nicht beschädigen kann. Dieser Abstand kann über die Länge der Schneidkante gesehen von innen nach außen anwachsen.

Gleichwohl ist auch bei der Schraube nach der Erfindung gewährleistet, daß der Kopf bei einer Anwendung der Senkschraube in weichem Material, wie Holz, vermittels der Schneidkante beim Eindrehen der Senkschraube sich selbst die Ansenkung schafft.

Es ist bevorzugt, daß jede Vorlauffläche kontinuierlich an die ihr zugehörige Stützfläche oder -kante anschließt, vorzugsweise mit einer Abrundung.

Vorteilhafte Ausgestaltungen der Erfindung sind in den Unteransprüchen angegeben.

Die Erfindung ist im folgenden anhand schematischer Zeichnungen mit weiteren Einzelheiten näher erläutert. Es zeigen:

Die Fig. 1 bis 6 eine erste Ausführung des Kopfes einer Senkkopfschraube gemäß der Erfindung, nämlich
- Fig. 1: eine perspektivische Ansicht einer abgebrochen ohne Gewindeteil gezeichneten Senkschraube mit Ansicht des erfindungsgemäß gestalteten Kopfes von schräg unten, wobei der Kopf auf einem aufgebrochen und dunkel schraffiert gezeichneten Anbauteil aufliegt und der Schaft der Schraube sich durch fluchtende Löcher in dem Anbauteil und in einem ebenfalls aufgebrochen gezeichneten Bauteil erstreckt;
- Fig. 2: eine Seitenansicht der Darstellung nach Fig. 1 mit aufgebrochenem Anbauteil und Bauteil;
- Fig. 3: eine Unteransicht mit aufgebrochenem Anbauteil und Bauteil zum Freigeben der Sicht auf einen Abschnitt der Unterseite des Kopfes;
- Fig. 4: einen Schnitt nach der Linie IV-IV in Fig. 3;
- Fig.: 5 einen Schnitt nach der Linie V-V in Fig. 3; und
- Fig. 6: einen Schnitt nach der Linie VI-VI in Fig. 2.

Die Figuren 7 bis 9 zeigen eine weitere Ausführung des Kopfes einer Senkschraube gemäß der Erfindung, wobei darstellen

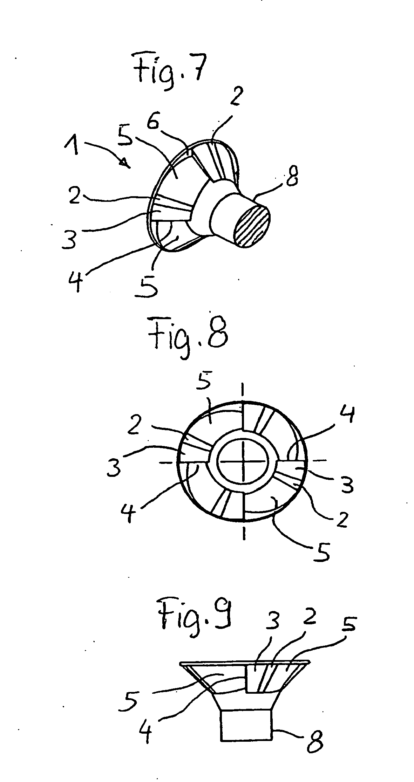

- Fig. 7: eine perspektivische Unteransicht des Kopfes;
- Fig. 8: eine Unteransicht von Schraube und Kopf; und
- Fig. 9: eine Seitenansicht der Schraube nach den Fig. 7 und 8.

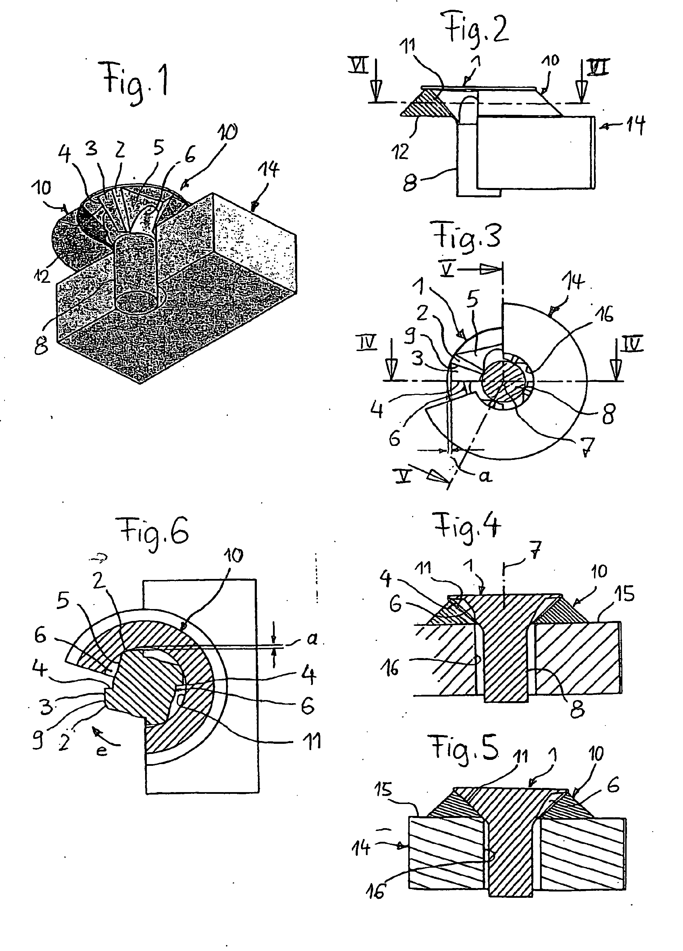

In den Figuren 7 bis 9 sind funktionsgleiche Teile mit den gleichen Bezugszahlen belegt wie in den Figuren 1 bis 6.

Die Figuren 1 bis 5 zeigen das Ensemble aus einer Senkschraube mit Kopf 1, die mit ihrem Schaft 8 durch ein ringförmiges Anbauteil 10 hindurch und anschließend durch eine Bohrung 16 eines Bauteils 14, wie einen Beschlag oder eine Holzlatte, ragt und mit ihrem nicht gezeigten Gewindeende des Schaftes 8 in eine ebenfalls nicht gezeigte Unterlage, wie eine Wand, eingeschraubt ist. Der Kopf 1 der Senkschraube hat auf seiner Unterseite vier um den Umfang gleichmäßig verteilte Stützflächen 2, welche sämtlich auf einer Rotationsfläche, hier auf einer Kegelfläche, um die Schraubenachse 7 angeordnet sind. Über diese Stützflächen 2 schmiegt sich die Schraube an einer entsprechend kegeligen Ansenkfläche 11 des Anbauteils 10 in dem gezeigten eingeschraubten Zustand an. In Eindrehrichtung e der Senkschraube gesehen vor jeder Stützfläche 2 ist je eine Vorlauffläche 3 angeordnet. Jede Vorlauffläche 3 ist radial einwärts geneigt und hat längs ihrem auflaufenden, freien Ende eine Schneidkante 4. Diese Schneidkante 4 ist aufgrund der Neigung der Vorlauffläche 3 radial nach einwärts mit Abstand a (Fig. 3, 4 und 6) von der Ansenkfläche 11 angeordnet, wobei dieser Abstand a sich ausgehend vom Ansatz am Schaft 8 in Richtung zum größten Kopfdurchmesser kontinuierlich vergrößert.

In Eindrehrichtung vor jeder Stützfläche 2 ist eine Vertiefung 6 angeordnet, die mit ihrem ablaufenden Ende bis zur nächsten Schneidkante 4 reicht und als Grund eine Freifläche 5 hat. Diese Freifläche 5 kann eben oder auch teilweise gewölbt sein, wie dies im Profil aus dem Schnitt VI-VI nach Fig. 6 ersichtlich ist.

Wird eine Senkschraube mit einem Kopf durch das Anbauteil 10 und das Bauteil 14 hindurch in die nicht gezeigte Unterlage eingeschraubt, so kommt die Schneidkante 4 mit der Ansenkfläche 11 nicht in Berührung und kann folglich diese oder eine darauf befindliche Beschichtung nicht verletzen.

Wenn andererseits eine Senkschraube mit einem Kopf 1 gemäß der Erfindung in ein weiches Material, wie Holz, eingeschraubt wird, schafft sich ihr Kopf 1 mit seinen Schneidkanten 4 selbst eine Ansenkung.

Die Senkschraube nach den Fig. 7 bis 9 unterscheidet sich von derjenigen nach den Fig. 1 bis 6 allein durch eine andere Gestaltung der Freifläche 5 und damit der Vertiefung 6. Die Freifläche 5 liegt hier auf jeweils einer eigenen Kegelmantelfläche, deren Achse windschief zur Schraubenachse 7 verläuft. Eine solche Gestaltung des Kopfes 1 ermöglicht eine einfache Herstellung der Senkschraube.

Die Vorlaufflächen 3, an deren freien Enden sich die Schneidkanten 4 befinden, können beliebig gekrümmt, aber auch eben ausgebildet sein. So können sie auf Kegel- oder Zylinderflächen liegen, die auch ballig gestaltet sein können

Die Stützfläche kann an die Vorlauffläche über eine sichtbare Kante anschließen, wie sie in den Figuren dargestellt und mit der Bezugszahl 9 bezeichnet ist. Bevorzugt ist jedoch, wenn der Übergang von der Stützfläche 2 zur Vorlauffläche 3 glatt, d.h. kantenfrei, ist, um auch so ein Beschädigen der Ansenkfläche 11 zu vermeiden. Ein solcher glatter Übergang kann durch eine eigens vorgesehene Abrundung bewirkt sein.

Die Stützfläche 2 ist bei den gezeigten Ausführungen vergleichsweise schmal gehalten, kann aber in Umfangsrichtung breiter oder auch schmäler sein und im Grenzfall zu einer Stützkante schrumpfen, die dann einen direkten Übergang zwischen Vorlauffläche 3 und Freifläche 4 bildet, die vorzugsweise dann auch abgerundet ist. Insbesondere ist eine solche Ausführung mit Stützkanten anstatt Stützflächen sinnvoll bei einem Kopf gemäß den Figuren 7 bis 9 mit den als Kegelmantelflächen ausgebildeten Freiflächen 5.

### Bezugszeichenliste

- 1: Kopf
- 2: Stützfläche
- 3: Vorlauffläche
- 4: Schneidkante
- 5: Freifläche
- 6: Vertiefung
- 7: Schraubenachse
- 8: Schaft
- 9: Kante
- 10: Anbauteil
- 11: Ansenkfläche des Anbauteils
- 12: Unterseite des Anbauteils
- 14: Bauteil
- 15: Oberfläche des Bauteils
- 16: Bohrung
- a: Abstand der Schneidkante/Rotationsfläche
- e: Eindrehrichtung

## Patentansprüche

1. Senkschraube mit Kopf mit einer Unterseite, die mindestens eine Stützfläche oder -kante (2), welche Teil einer Rotationsfläche um die Schraubenachse (7) bildet und sich an eine entsprechend konturierte Ansenkfläche (11) eines Anbauteils (10) anschmiegen kann, und mindestens eine Vertiefung (6) aufweist, welche an ihrem in Eindrehrichtung (e) der Senkschraube gesehen ablaufenden Ende durch eine Schneidkante (4) begrenzt ist, **dadurch gekennzeichnet, daß** in Eindrehrichtung (e) gesehen vor der Stützfläche (2) eine daran anstoßende, radial einwärts geneigte Vorlauffläche (3) angeordnet ist, welche an ihrem freien Ende die Schneidkante (4) hat, die über ihre Länge von der Rotationsfläche einen radialen Abstand (a) nach innen wahrt.

2. Senkschraube nach Anspruch 1, **dadurch gekennzeichnet, daß** die Vorlauffläche (3) mit ihrem ablaufenden Ende kontinuierlich an die Stützfläche (2) anschließt.

3. Senkschraube nach Anspruch 1 oder 2, **dadurch gekennzeichnet, daß** die Stützfläche (2) Teil einer Kegelfläche oder einer Zylinderfläche ist.

4. Senkschraube nach einem der Ansprüche 1 bis 3, **dadurch gekennzeichnet, daß** die Stützfläche (2) konvex oder konkav gewölbt ist und daß die Ansenkfläche (11) komplementär zur Stützfläche (2) konkav oder konvex gewölbt ist.

5. Senkschraube nach einem der Ansprüche 1 bis 4, **dadurch gekennzeichnet, daß** die Vorlauffläche (3) Teil einer Kegelfläche, einer Zylinderfläche, einer Kreisfläche oder einen ebenen Fläche ist.

6. Senkschraube nach einem der Ansprüche 1 bis 5, **dadurch gekennzeichnet, daß** die Vorlauffläche (3) konvex oder konkav gewölbt ist.

7. Senkschraube nach einem der Ansprüche 2 bis 6, **dadurch gekennzeichnet, daß** die Vorlauffläche (3) an die Stützfläche (2) glatt, d.h. kantenfrei, anschließt.

8. Senkschraube nach einem der Ansprüche 2 bis 7, **dadurch gekennzeichnet, daß** der kontinuierliche Übergang zwischen Vorlauffläche (3) und Stützfläche (2) durch eine Abrundung erzeugt ist.

9. Senkschraube nach einem der Ansprüche 1 bis 8, **dadurch gekennzeichnet, daß** in Eindrehrichtung gesehen hinter der Stützfläche (2) eine Freifläche (5) angeordnet ist.

10. Senkschraube nach Anspruch 9, **dadurch gekennzeichnet, daß** die Freifläche (5) auf einer Kegelmantelfläche liegt, deren Achse nicht mir der Schraubenachse (7) zusammenfällt.

## Claims

1. Countersunk screw comprising a head with an underside which has at least one support surface or edge (2), which support surface or edge is part of a rotational surface around the screw axis (7) and can cling to a correspondingly contoured countersunk surface (11) of an add-on part (10), and at least one depression (6), which is delimited by a cutting edge (4) at its trailing end, as seen in the screwing-in direction (e) of the countersunk screw, **characterised in that** a radially inwardly inclined advancing surface (3) which abuts the support surface (2) is arranged downstream of the said support surface as seen in the screwing-in direction (e), which advancing surface has the cutting surface (4) at its leading free end, which cutting surface maintains an inward radial distance (a) from the rotational surface over its length.

2. Countersunk screw according to Claim 1, **characterised in that** the trailing end of the advancing surface (3) continuously adjoins the support surface (2).

3. Countersunk screw according to Claim 1 or 2, **characterised in that** the support surface (2) is part of a conical surface or a cylindrical surface.

4. Countersunk screw according to one of Claims 1 to 3, **characterised in that** the support surface (2) is convexly or concavely curved and **in that** the countersunk surface (11) is concavely or convexly curved in a manner complementary to the support surface (2).

5. Countersunk screw according to one of Claims 1 to 4, **characterised in that** the advancing surface (3) is part of a conical surface, of a cylindrical surface, of a circular surface or of a planar surface.

6. Countersunk screw according to one of the Claims 1 to 5, **characterised in that** the advancing surface (3) is convexly or concavely curved.

7. Countersunk screw according to one of Claims 2 to 6, **characterised in that** the advancing surface (3) adjoins the support surface (2) in a smooth, that is to say edge-free, manner.

8. Countersunk screw according to one of Claims 2 to 7, **characterised in that** the continuous transition between the advancing surface (3) and support surface (2) is created by a rounding.

9. Countersunk screw according to one of Claims 1 to 8, **characterised in that** a flank (5) is arranged downstream of the support surface (2) as seen in the screwing-in direction.

10. Countersunk screw according to Claim 9, **characterised in that** the flank (5) is located on a conical lateral surface, the axis of which is not coincident with the screw axis (7).

## Revendications

1. Vis à tête fraisée avec un dessous qui présente au moins une face ou une arête d'appui (2) qui forme une partie d'une face de rotation autour de l'axe de la vis (7) et peut s'adapter à une face fraisée (11) au contour correspondant d'une pièce à rapporter (10), et au moins une cavité (6) qui est délimitée au niveau de son extrémité descendante vu dans le sens de vissage (e) de la vis à tête fraisée par une arête de coupe (4), **caractérisée en ce que** vu dans le sens de vissage (e) devant la face d'appui (2) est disposée une face montante (3) contigüe à celle-ci, inclinée radialement vers l'intérieur qui a au niveau de son extrémité libre l'arête de coupe (4) qui garde sur sa longueur de la face de rotation une distance (a) radiale vers l'intérieur.

2. Vis à tête fraisée selon la revendication 1, **caractérisée en ce que** la face montante (3) avec son extrémité descendante est contigüe en continu à la face d'appui (2).

3. Vis à tête fraisée selon la revendication 1 ou 2, **caractérisée en ce que** la face d'appui (2) est une partie d'une face conique ou d'une face cylindrique.

4. Vis à tête fraisée selon l'une quelconque des revendications 1 à 3, **caractérisée en ce que** la face d'appui (2) est cintrée de manière convexe ou concave et **en ce que** la face fraisée (11) est cintrée de manière concave ou convexe en complément de la face d'appui (2).

5. Vis à tête fraisée selon l'une quelconque des revendications 1 à 4, **caractérisée en ce que** la face montante (3) est une partie d'une face conique, d'une face cylindrique, d'une face circulaire ou d'une face plane.

6. Vis à tête fraisée selon l'une quelconque des revendications 1 à 5, **caractérisée en ce que** la face montante (3) est cintrée de manière convexe ou concave.

7. Vis à tête fraisée selon l'une quelconque des revendications 2 à 6, **caractérisée en ce que** la face montante (3) est adjacente de manière lisse, c'est-à-dire sans arête à la face d'appui (2).

8. Vis à tête fraisée selon l'une quelconque des revendications 2 à 7, **caractérisée en ce que** la transition continue entre la face montante (3) et la face d'appui (2) est générée par un arrondi.

9. Vis à tête fraisée selon l'une quelconque des revendications 1 à 8, **caractérisée en ce que** vu dans le sens de vissage derrière la face d'appui (2) est disposée une face de dépouille (5).

10. Vis à tête fraisée selon la revendication 9, **caractérisée en ce que** la face de dépouille (5) se trouve sur une face latérale conique, dont l'axe ne coïncide pas avec l'axe de la vis (7).
